# EUROPEAN PATENT APPLICATION

(11) **EP 2 985 902 A2**
(43) Date of publication of application: **17.02.2016**
(21) Application number: 15179035.9
(22) Date of filing: 30.07.2015
(51) Int. Cl.: H02M 7/483, H02M 1/32

(54) **MODULAR MULTI-LEVEL POWER CONVERSION SYSTEM WITH DC FAULT CURRENT LIMITING CAPABILITY**

(30) Priority: 07.08.2014 US 201414453637
(71) Applicant: General Electric Company, Schenectady, NY 12345 (US)
(72) Inventor: RAJU, Ravisekhar Nadimpalli, Niskayuna, NY 12309-1027 (US); GARCES, Luis Jose, Niskayuna, NY 12309 (US); GUPTA, Ranjan Kumar, Niskayuna, NY 12309-1027 (US); ZHANG, Di, Niskayuna, NY 12309 (US); ROCKHILL, Andrew Allen, Waukesha, WI 53186 (US)
(74) Representative: Serjeants LLP

(57) **Abstract**

A power converter module (100) is provided. The power converter module (100) includes a first converter leg (120) and a second converter leg (130). The first converter leg (120) includes a first switching unit (140) and a second switching unit (150) coupled in series. The second switching unit (150) is disposed in a reverse orientation with respect to an orientation of the first switching unit (140). The second converter leg (130) includes a third switching unit (160) and a diode (170) coupled in series. The third switching unit (160) is disposed in a reverse orientation with respect to the orientation of the first switching unit (140). The power converter module (100) also includes a first energy storage device (180) operatively coupled between the first converter leg (120) and the second converter leg (130). The power converter module (100) further includes a second energy storage device (190) operatively coupled between the first converter leg (120) and the second converter leg (130).

## Description

### CROSS REFERENCE TO RELATED APPLICATIONS

This application is a continuation-in-part of US Patent Application No. 13/484517, entitled "MULTI-LEVEL POWER CONVERTER," filed on May 31, 2012, which is herein incorporated by reference.

### BACKGROUND

Embodiments of the present disclosure are related to power conversion systems, and more particularly to a multi-level power conversion system.

Power conversion systems are often used to convert alternating current (AC) power to direct current power (DC) at a transmitting substation and to convert the transmitted DC power back to AC power at a receiving substation in high voltage direct current (HVDC) transmissions. In one approach, such power conversion systems have a modular multi-level structure. The modular multi-level structure includes a stacked arrangement of power converter modules for converting AC power to DC power and DC power to AC power.

Various designs of power converter modules have been employed to form modular multi-level power conversion systems. One such design of the power converter modules includes a half bridge which in turn includes two switches coupled across a capacitor. Such a half bridge module is susceptible to DC faults, for example, a DC short circuit. Moreover, the half bridge module is incapable of limiting such short circuit currents.

Furthermore, a full bridge power converter module has been employed to overcome the shortcomings of the half bridge module. The full bridge power converter module, while capable of limiting the DC short circuit current, entails use of twice the number of switches as the half bridge structure. Such an increased number of switches result in higher losses and costs.

Additionally, a double clamped power converter module has also been employed to limit the short circuit current. Switches in the double clamped power converter module have a power rating between the power ratings of the switches of the half bridge power converter module and the full bridge power converter module. However, the double clamped power converter module includes additional electronic components in comparison to the full bridge power converter module. Use of these additional electrical components leads to higher costs and complexities in a modular approach.

Lately, another approach has been used to design the power converter module. This approach includes two switches and two capacitors in each power converter module. Such a power converter module allows easier insulation and better cooling during operation. However, this configuration fails to limit the short circuit current under DC fault conditions.

### BRIEF DESCRIPTION

In accordance with an aspect of the present disclosure, a power converter module is provided. The power converter module includes a first converter leg and a second converter leg. The first converter leg includes a first switching unit and a second switching unit coupled in series. The second switching unit is disposed in a reverse orientation with respect to an orientation of the first switching unit. The second converter leg includes a third switching unit and a diode coupled in series. The third switching unit is disposed in a reverse orientation with respect to the orientation of the first switching unit. The power converter module also includes a first energy storage device operatively coupled between the first converter leg and the second converter leg. The power converter module further includes a second energy storage device operatively coupled between the first converter leg and the second converter leg.

In accordance with another aspect of the present disclosure, a power conversion system is provided. The power conversion system includes a plurality of phase units, where each phase unit is configured to convert power corresponding to a respective phase of an input power. Also, each phase unit includes a plurality of power converter modules coupled in series to each other. Moreover, each power converter module includes a first converter leg and a second converter leg. The first converter leg includes a first switching unit and a second switching unit coupled in series. The second switching unit is disposed in a reverse orientation with respect to an orientation of the first switching unit. The second converter leg includes a third switching unit and a diode coupled in series. The third switching unit is disposed in a reverse orientation with respect to the orientation of the first switching unit. The power converter module also includes a first energy storage device and a second energy storage device operatively coupled between the first converter leg and the second converter leg.

In accordance with yet another aspect of the present disclosure, a method for converting power is provided. The method includes coupling a first switching unit and a second switching unit in series to form a first converter leg, where the second switching unit is disposed in a reverse orientation with respect to an orientation of the first switching unit. The method also includes coupling a third switching unit and a diode coupled in series to form a second converter leg, where the third switching unit is disposed in a reverse orientation with respect to the orientation of the first switching unit. The method further includes operatively coupling a first energy storage device and a second energy storage device between the first converter leg and the second converter leg to form a power converter module. The method also includes operatively coupling a plurality of power converter modules to form a power conversion system configured to convert an input power to an output power. The method further includes limiting a fault condition in the power conversion system upon identifying the fault condition to minimize a DC fault current in the power conversion system.

### DRAWINGS

These and other features, aspects, and advantages of the present invention will become better understood when the following detailed description is read with reference to the accompanying drawings in which like characters represent like parts throughout the drawings, wherein:
FIG. 1 is a schematic representation of a high voltage direct current (HVDC) transmission system, according to aspects of the present disclosure;
FIG. 2 is a schematic representation of a power converter module employed in forming a power conversion system for use in the HVDC transmission system of FIG. 1, according to aspects of the present disclosure;
FIG. 3 is a schematic representation of a power converter module configured to provide a positive voltage across electrical terminals of a power converter module, according to aspects of the present disclosure;
FIG. 4 is a schematic representation of a power converter module configured to provide zero voltage across electrical terminals of a power converter module, according to aspects of the present disclosure;
FIG. 5 is a schematic representation of a power converter module configured to provide a negative voltage across electrical terminals of a power converter module, according to aspects of the present disclosure;
FIG. 6 is a schematic representation of another embodiment of a power converter module, according to aspects of the present disclosure;
FIG. 7 is a schematic representation of yet another embodiment of a power converter module, according to aspects of the present disclosure; and
FIG. 8 is a flow chart representing a method for power conversion, according to aspects of the present disclosure.

### DETAILED DESCRIPTION

Unless defined otherwise, technical and scientific terms used herein have the same meaning as is commonly understood by one of ordinary skill in the art to which this disclosure belongs. The terms "first", "second", and the like, as used herein do not denote any order, quantity, or importance, but rather are used to distinguish one element from another. Also, the terms "a" and "an" do not denote a limitation of quantity, but rather denote the presence of at least one of the referenced items. The term "or" is meant to be inclusive and mean one, some, or all of the listed items. The use of "including," "comprising" or "having" and variations thereof herein are meant to encompass the items listed thereafter and equivalents thereof as well as additional items. The terms "connected" and "coupled" are not restricted to physical or mechanical connections or couplings, and can include electrical connections or couplings, whether direct or indirect. Furthermore, the terms "circuit," "circuitry," "controller," and "processor" may include either a single component or a plurality of components, which are either active and/or passive and are connected or otherwise coupled together to provide the described function.

Aspects of the present disclosure are related to a power converter module and a power conversion system including the power converter module. In one embodiment, the power conversion system may include a high voltage direct current (HVDC) transmission system, a power distribution system, an electrical machine control system, or a combination thereof. The power conversion system includes a plurality of phase units. Moreover, each phase unit is configured to convert power corresponding to a respective phase of an input power. Furthermore, each phase unit includes a plurality of power converter modules coupled in series to each other.

The power converter module may include a first converter leg and a second converter leg. The first converter leg may include a first switching unit and a second switching unit coupled in series. The second switching unit may be disposed in a reverse orientation with respect to an orientation of the first switching unit. Furthermore, the second converter leg may include a third switching unit and a diode coupled in series. The third switching unit may be disposed in a reverse orientation with respect to the orientation of the first switching unit. Moreover, the power converter module may also include a first energy storage device and a second energy storage device operatively coupled between the first converter leg and the second converter leg.

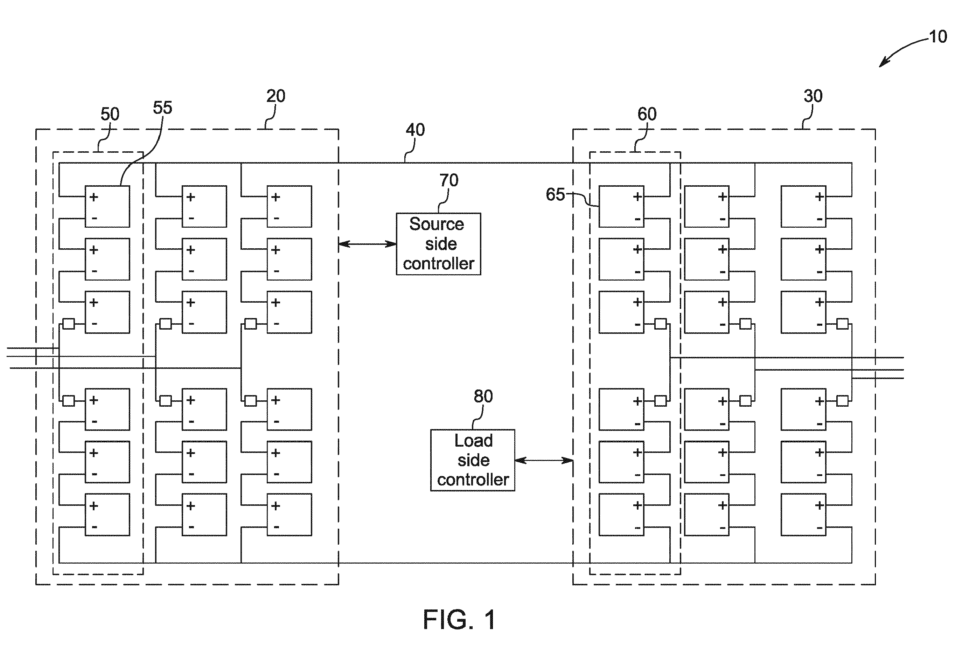

FIG. 1 is a schematic representation of a high voltage direct current (HVDC) transmission system 10, according to aspects of the present disclosure. The HVDC transmission system 10 may include an alternating current (AC) to direct current (DC) power conversion system 20 and a direct current (DC) to alternating current (AC) power conversion system 30 operatively coupled via a DC link 40. Hereinafter, the AC-DC power conversion system 20 may be referred to as a "source side power conversion system" and the DC-AC power conversion system 30 may be referred to as a "load side power conversion system." Moreover, the source side power conversion system 20 may include a plurality of source side phase units 50 and the load side power conversion system 30 may include a plurality of load side phase units 60. Each of the source side phase units 50 may be configured to convert a respective phase of an AC power to a DC power. Similarly, each of the load side phase units 60 may be configured to convert the DC power to a respective phase of the AC power. In one embodiment, the plurality of source side phase units 50 may be operatively coupled in parallel. In another embodiment, the plurality of load side phase units 60 may be operatively coupled in parallel. It may be noted that a number of phase units in the source side power conversion system 20 and the load side power conversion system 30 may correspond to a number of phases of the AC power. For example, converting a three phase AC power using the source side power conversion system 20 and the load side power conversion system 30 may require three phase units in the source side power conversion system 20 and three phase units in the load side power conversion system 30.

Furthermore, the plurality of source side phase units 50 may include a plurality of source power converter modules 55 operatively coupled in series to each other. Similarly, the plurality of load side phase units 60 may include a plurality of load power converter modules 65 operatively coupled in series to each other. Moreover, the source side power conversion system 20 may be operatively coupled to a source side controller 70 and the load side power conversion system 30 may be operatively coupled to a load side controller 80. The source side controller 70 may be configured to control switching operations of the source power converter modules 55 to generate the DC power from the AC power. During normal operation, each of the source power converter modules 55 may be controlled independently by the source side controller 70 to provide a zero voltage or a positive voltage at respective electrical terminals to generate the source voltage of the respective phase in the HVDC transmission system 10. The zero voltages or the positive voltages may be added to generate the source voltage for the respective phase. Similarly, the source voltage corresponding to other phases may be generated by controlling the source power converter modules 55 of respective source side phase units 50. Moreover, the load power converter modules 65 may also be similarly controlled by the load side controller 80 to regulate a load side voltage or current. Furthermore, during a fault condition such as a short circuit at the DC link 40, the power converter modules 55 and 65 may be controlled to provide a negative voltage in opposition to alternating current phase voltages on the source side power conversion system 20 and the load side power conversion system 30 for reducing a DC fault current.

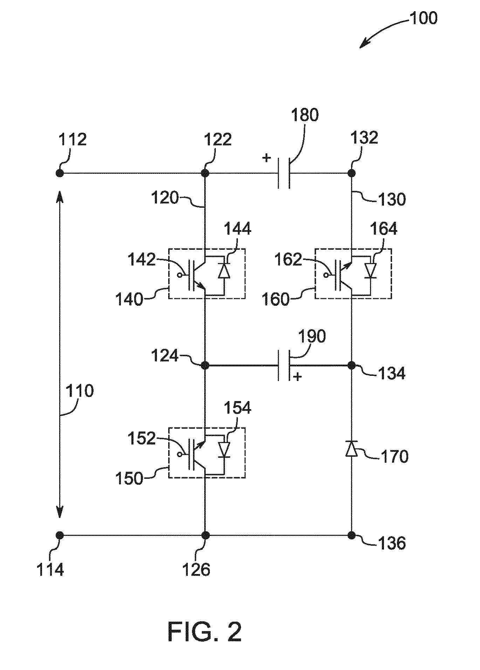

FIG. 2 is a schematic representation of a power converter module 100. In a presently contemplated configuration, the power converter module 100 may be substantially similar to the configurations of the source power converter module 55 and the load power converter module 65 of FIG. 1, according to aspects of the present disclosure. The power converter module 100 may include an electrical terminal 110. The electrical terminal 110 may include a first terminal node 112 and a second terminal node 114. Moreover, in one embodiment, the power converter module 100 may also include a first converter leg 120 and a second converter leg 130.

The first converter leg 120 may include a first node 122, a second node 124, and a third node 126. The first node 122 may be operatively coupled to the first terminal node 112 of the electrical terminal 110. The third node 126 may be operatively coupled to the second terminal node 114 of the electrical terminal 110. Furthermore, the first converter leg 120 may also include a first switching unit 140 and a second switching unit 150 coupled in series to each other. The first switching unit 140 may be disposed between the first node 122 and the second node 124 of the first converter leg 120. Furthermore, the second switching unit 150 may be disposed between the second node 124 and the third node 126 of the first converter leg 120. Moreover, the second converter leg 130 may include a fourth node 132, a fifth node 134, and a sixth node 136. The second converter leg 130 may also include a third switching unit 160 and a diode 170. Furthermore, the third switching unit 160 may be disposed between the fourth node 132 and the fifth node 134 of the second converter leg 130. The diode 170 may be disposed between the fifth node 134 and the sixth node 136 of the second converter leg 130.

Furthermore, the first switching unit 140 may include a first switch 142 and a first switching diode 144. Similarly, the second switching unit 150 may include a second switch 152 and a second switching diode 154. Moreover, the third switching unit 160 may include a third switch 162 and a third switching diode 164. In one embodiment, the first switch 142 may be operatively coupled in an anti-parallel configuration to the first switching diode 144, while the second switch 152 may be operatively coupled in an anti-parallel configuration to the second switching diode 154. The third switch 162 may be operatively coupled in an anti-parallel configuration with respect to the third switching diode 164.

In one embodiment, the first switch 142, the second switch 152, and the third switch 162 may include insulated gate bipolar transistor (IGBT) switches, mechanical switches, or a combination thereof. It may be noted that the second switching unit 150 and the third switching unit 160 may be disposed in a reverse orientation with respect to an orientation of the first switching unit 140. In particular, the second switch 152 and the third switch 162 may be disposed in a reverse orientation with respect to an orientation of the first switch 142. It may be noted that each of the first switch 142, the second switch 152, and the third switch 162 includes an anode or a collector and a cathode or an emitter. The collector of the first switch 142 may be coupled to the first terminal node 112 of the electrical terminal 110. The emitter of the first switch 142 may be coupled to the emitter of the second switch 152. Moreover, the collector of the second switch 152 may be coupled to the second terminal node 114 of the electrical terminal 110. Also, the emitter and the collector of the third switch 162 may be coupled to the fourth node 132 and the diode 170 respectively. Similarly, the second switching diode 154 and the third switching diode 164 may be operatively coupled in a reverse orientation with respect to an orientation of the first switching diode 144.

Additionally, the power converter module 100 may also include a first energy storage device 180 and a second energy storage device 190. The first energy storage device 180 may be operatively coupled between the first node 122 and the fourth node 132. Also, the second energy storage device 190 may be operatively coupled between the second node 124 and the fifth node 134. In one embodiment, the first energy storage device 180 and the second energy storage device 190 may be operatively coupled in opposing polarities with respect to each other. The first energy storage device 180 and the second energy storage device 190 may provide a positive voltage or a zero voltage at the electrical terminal 110 of the power converter module 100. In one embodiment, the first energy storage device 180 and the second energy storage device 190 may include a capacitor. Also, in one embodiment, the power converter module 100 may be configured as the source power converter module 55 of FIG. 1. In another embodiment, the power converter module 100 may be configured as the load power converter module 65 of FIG. 1.

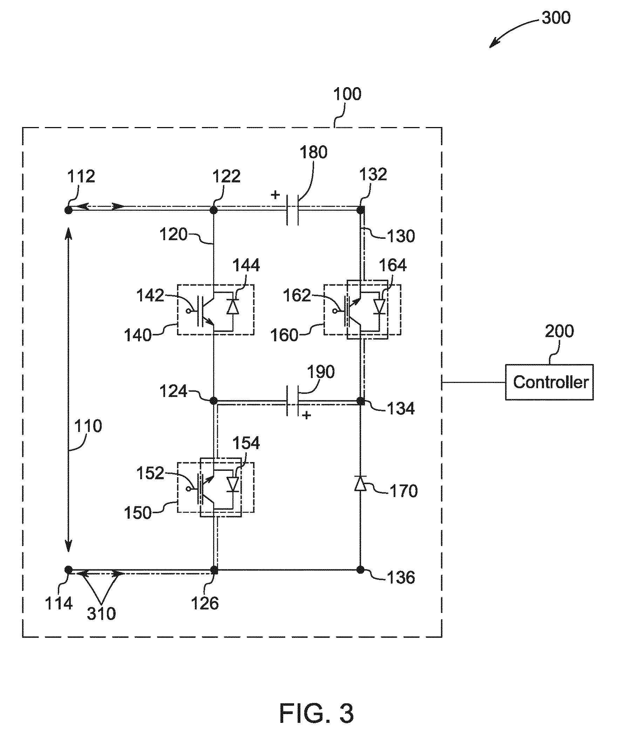

In situations of a fault in a DC link, the power converter module 100 may be configured to generate a negative voltage at the electrical terminal 110 to minimize a DC fault current and limit the fault. In one embodiment, the fault may include a DC fault in the DC link 40 (see FIG. 1). The source side controller 70 (see FIG. 1) or the load side controller 80 (see FIG. 1) may be configured to identify the fault condition in the DC link and transition the first, second and third switches 142, 152, and 162 in the power converter module 100 to a non-conducting state. In such a situation, the DC fault current is forced to flow from second terminal node 114 to the first terminal node 112 through the diode 170 and the second energy storage device 190. Therefore, the voltage at the electrical terminal 110 is negative and has a value of half of the positive voltage as the DC fault current passes only through the second energy storage device 190. Such a negative voltage may be utilized to minimize the DC fault current and thereby limit the fault condition. The operation of the power converter module 100 will be described in greater detail with respect to FIGs. 3-5.

FIG. 3 is a schematic representation 300 of the power converter module 100 of FIG. 2 configured to provide a positive voltage at the electrical terminal 110, according to aspects of the present disclosure. A controller 200 may be operatively coupled to the power converter module 100 and configured to control the first switching unit 140, the second switching unit 150, the third switching unit 160, or combinations thereof to provide the positive voltage at the electrical terminal 110. In one embodiment, the controller 200 may be similar to the source side controller 70 of FIG. 1 or the load side controller 80 of FIG. 1 based on a configuration of the power converter module 100. The controller 200 may be configured to transition the second switching unit 150 and the third switching unit 160 to a conducting state from the non-conducting state. Moreover, the first switch 142 may be controlled by the controller 200 to maintain the non-conducting state. The current represented by the first negative voltage current path 310 may flow from the second terminal node 114 through the second switch 152, the second energy storage device 190, the third switch 162, and the first energy storage device 180 to the first terminal node 112. Similarly, the current may flow in a reverse direction from the first terminal node 112 through the first energy storage device 180, the third switching diode 164, the second energy storage device 190, and the second switching diode 154 to the second terminal node 114. In such an embodiment, a positive voltage appears at the electrical terminal 110 between first terminal node 112 and the second terminal node 114.

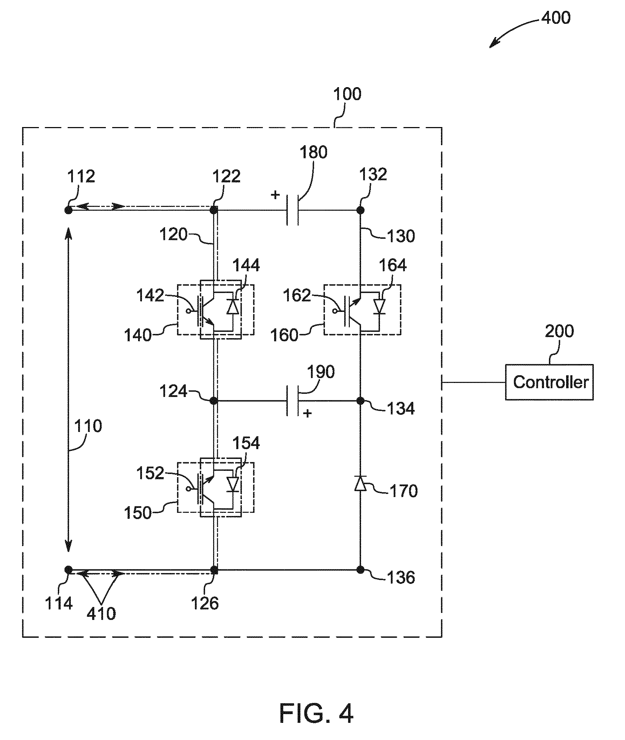

FIG. 4 is a schematic representation 400 of the power converter module 100 configured to provide a zero voltage at the electrical terminal 110, according to aspects of the present disclosure. During normal operation, each AC cycle includes durations during which it may be desirable to provide a zero voltage at the electrical terminal 110. Accordingly, the controller 200 may be configured to control the first, second and third switching units 140, 150, 160, or combinations thereof to bypass the first energy storage device 180 and the second energy storage device 190. For example, the controller 200 may be configured to control the first switching unit 140 and the second switching unit 150 to provide a second negative voltage current path 410 that bypasses the first energy storage device 180 and the second energy storage device 190. In this configuration, no current passes through the first energy storage device 180 and the second energy storage device 190. Therefore, due to the absence of a current flowing through the first energy storage device 180 and the second energy storage device 190, no voltage is generated in the power converter module 100 and a zero voltage appears at the electrical terminal 110.

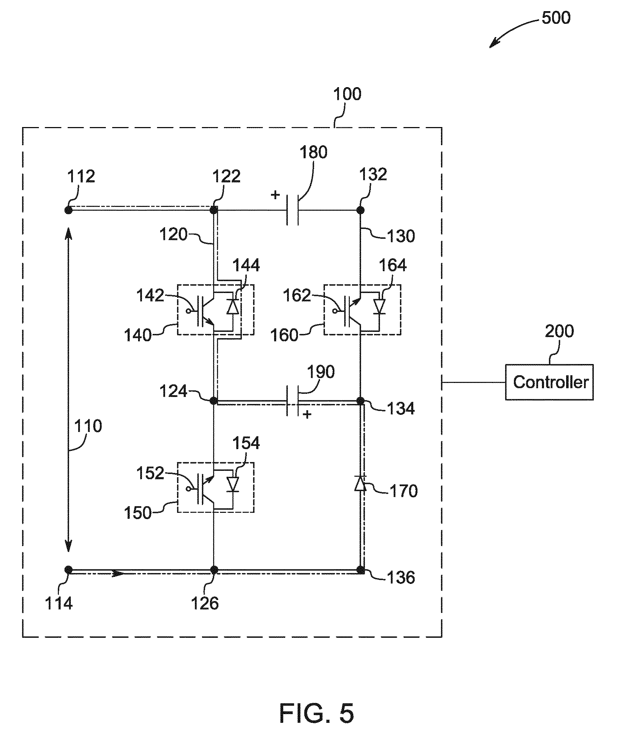

Referring now to FIG. 5, a schematic representation 500 of the power converter module 100 configured to generate a negative voltage, according to aspects of the present disclosure is depicted. In certain situations, a fault condition may occur during operation of the source side power conversion system 20 of FIG. 1. In one example, the fault condition may include a DC short circuit condition. Such fault conditions induce a fault current in the source power converter modules 55 (see FIG. 1). It may be desirable to limit the fault condition in the source power conversion system. The fault condition in the source side power conversion system may be limited by minimizing a DC fault current in the source side power conversion system. To this end, a negative voltage may be generated at the electrical terminals of the source power converter modules which in turn may aid in minimizing the DC fault current.

The power converter module 100 is operatively coupled to the controller 200 that may be configured to control the switching operations of the power converter module 100 to generate the negative voltage. The controller 200 may be configured to control the first switching unit 140, the second switching unit 150, and the third switching unit 160 of the power converter module 100 to limit the fault condition. The controller 200 may be configured to either maintain the first switch 142, the second switch 152, and the third switch 162 at a non-conducting state or transition the first switch 142, the second switch 152, and the third switch 162 to the non-conducting state. Consequently, due to the inherent property of current to flow through a path of least resistance, the DC fault current flows from the second terminal node 114 through the diode 170, the second energy storage device 190, and the first switching diode 144 to the first terminal node 112. Due to the aforementioned negative voltage current path, the voltage at the electrical terminal 110 is negative and equal in magnitude to the voltage across the second energy storage device 190. Such a negative voltage provided by the power converter module minimizes the DC fault current by opposing the alternating current (AC) voltage on the source side power conversion system (see FIG. 1) or the load side power conversion system (see FIG. 1) and hence limits the fault condition.

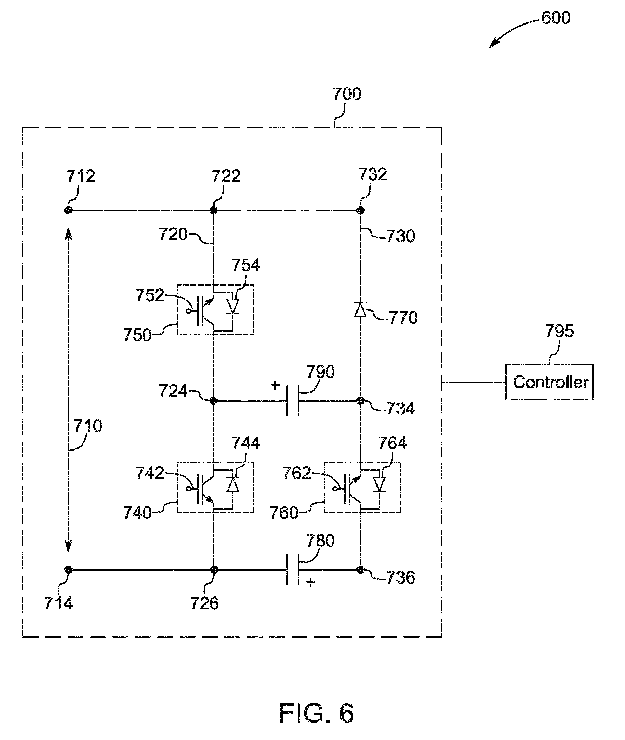

Turning now to FIG. 6, a schematic representation 600 of an alternative embodiment of a power converter module 700, according to aspects of the present disclosure is depicted. The power converter module 700 may include an electrical terminal 710. The electrical terminal 710 may include a first terminal node 712 and a second terminal node 714. The power converter module 700 may also include a first converter leg 720 and a second converter leg 730. The first converter leg 720 and the second converter leg 730 may be coupled in parallel between the first terminal node 712 and the second terminal node 714 of the electrical terminal 710. The first converter leg 720 may include a first node 722, a second node 724, and a third node 726. The first converter leg 720 may also include a first switching unit 740 and a second switching unit 750 coupled in series to each other. The first switching unit 740 may be disposed between the second node 724 and the third node 726 in the first converter leg 720. Furthermore, the second switching unit 750 may be disposed between the first node 722 and the second node 724 in the first converter leg 720. Moreover, the second converter leg 730 may include a fourth node 732, a fifth node 734, and a sixth node 736. The second converter leg 730 may also include a third switching unit 760 and a diode 770. The third switching unit 760 may be disposed between the fifth node 734 and the sixth node 736. The diode 770 may be disposed between the fourth node 732 and the fifth node 734.

Furthermore, the first switching unit 740 may include a first switch 742 and first switching diode 744. Similarly, the second switching unit 750 may include a second switch 752 and a second switching diode 754. Moreover, the third switching unit 760 may include a third switch 762 and a third switching diode 764. In one embodiment, the first switch 742 may be operatively coupled in an anti-parallel configuration to the first switching diode 744, while the second switch 752 may be operatively coupled in an anti-parallel configuration to the second switching diode 754. The third switch 762 may be coupled in an anti-parallel configuration to the third switching diode 764. In certain embodiments, the first switch 742, the second switch 752, and the third switch 762 may include insulated gate bipolar transistor

(IGBT) switches, mechanical switches, or a combination thereof. It may be noted that the second switching unit 750 and the third switching unit 760 may be disposed in a reverse orientation with respect to an orientation of the first switching unit 740. In particular, the second switch 752 and the third switch 762 may be disposed in a reverse orientation with respect to an orientation of the first switch 742.

In one embodiment, each of the first switch 742, the second switch 752 and the third switch 762 includes an anode or a collector and a cathode or an emitter. The collector of the first switch 742 may be coupled to the collector of the second switch 752. The emitter of the first switch 742 may be coupled to the second terminal node 714. Moreover, the emitter of the second switch 752 may be coupled to the first terminal node 712 of the electrical terminal 710. Also, the collector and the emitter of the third switch 762 may be coupled to sixth node 736 and the diode 770 respectively. Similarly, the second switching diode 754 and the third switching diode 764 may be disposed in a reverse orientation with respect to an orientation of the first switching diode 744.

Additionally, the power converter module 700 may also include a first energy storage device 780 and a second energy storage device 790. The first energy storage device 780 may be operatively coupled between the third node 726 and the sixth node 736. Also, the second energy storage device 790 may be operatively coupled between the second node 724 and the fifth node 734. In one embodiment, the first energy storage device 780 and the second energy storage device 790 may be operatively coupled to each other in polarities opposite with respect to each other. Furthermore, a controller 795 may be coupled to the power converter module 700 and may be configured to control switching operations of the first switching unit 740, the second switching unit 750, and the third switching unit 760 in the power converter module 700.

In the embodiment of FIG. 6, in case of a DC fault, the first switch 742, the second switch 752, and the third switch 762 are transitioned to a non-conducting state and the DC fault current flows from the second terminal node 714 through the first switching diode 744, the second energy storage device 790 and the diode 770 to the first terminal node 712. Due to the aforementioned flow of the DC fault current, a negative voltage appears across the electrical terminal 710. Such a negative voltage provided by the power converter module 700 minimizes the DC fault current by opposing the alternating current (AC) voltage on the source side power conversion system 20 (see FIG. 1) or the load side power conversion system 30 (see FIG. 1) and hence limits the fault condition.

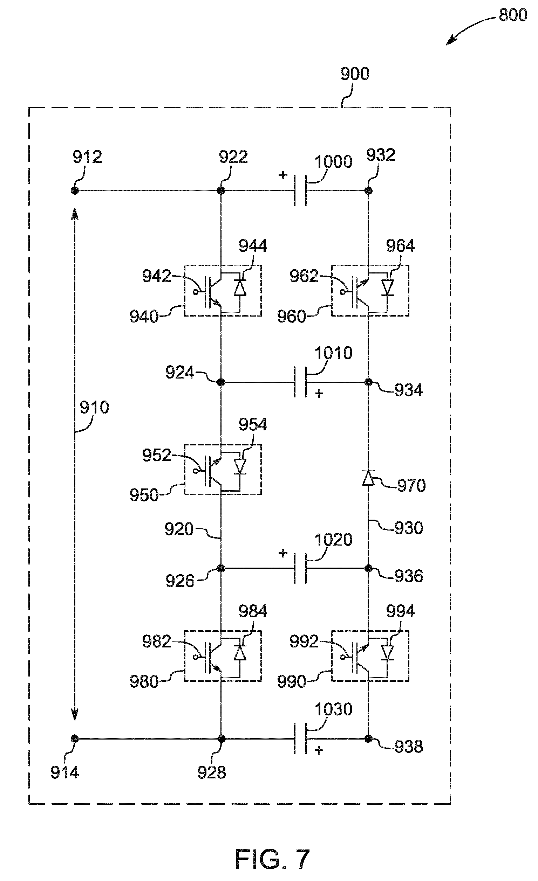

In accordance with further aspects of the present disclosure, additional switching units and energy storage devices may be included in the power converter module 100 of FIG. 1 to increase a power conversion capability of the power converter module 100. Another embodiment of a power converter module 800 that includes additional switching units and energy storage devices is presented in FIG. 7.

FIG. 7 is a schematic representation 800 of another embodiment of a power converter module 900, according to aspects of the present disclosure. The power converter module 900 may include an electrical terminal 910. The electrical terminal 910 may include a first terminal node 912 and a second terminal node 914. The power converter module 900 may also include a first converter leg 920 and a second converter leg 930. The first converter leg 920 and the second converter leg 930 may be coupled in parallel between the first terminal node 912 and the second terminal node 914 of the electrical terminal 910. The first converter leg 920 may include a first node 922, a second node 924, a third node 926 and a fourth node 928. The first converter leg 920 may also include a first switching unit 940 and a second switching unit 950 coupled in series to each other. The first switching unit 940 may be operatively coupled between the first node 922 and the second node 924 in the first converter leg 920. Furthermore, the second switching unit 950 may be operatively coupled between the second node 924 and the third node 926 in the first converter leg 920. Moreover, the second converter leg 930 may include a fifth node 932, a sixth node 934, a seventh node 936 and an eighth node 938. The second converter leg 930 may include a third switching unit 960 and a diode 970. The third switching unit 960 may be operatively coupled between the fifth node 932 and the sixth node 934. The diode 970 may be operatively coupled between the sixth node 934 and the seventh node 936.

Furthermore, the first converter leg 920 may also include a fourth switching unit 980. Similarly, the second converter leg 930 may also include a fifth switching unit 990. The fourth switching unit 980 may be operatively coupled between the third node 926 and the fourth node 928 in the first converter leg 920. Also, the fifth switching unit 990 may be operatively coupled between the seventh node 936 and the eighth node 938.

Moreover, the first switching unit 940 may include a first switch 942 and first switching diode 944. Similarly, the second switching unit 950 may include a second switch 952 and a second switching diode 954. Moreover, the third switching unit 960 may include a third switch 962 and a third switching diode 964. Furthermore, the fourth switching unit 980 may include a fourth switch 982 and a fourth switching diode 984. Also, the fifth switching unit 990 may include a fifth switch 992 and a fifth switching diode 994. In one embodiment, the first switch 942 may be operatively coupled in an anti-parallel configuration to the first switching diode 944, while the second switch 952 may be operatively coupled in an anti-parallel configuration to the second switching diode 954. Similarly, the third switch 962 may be operatively coupled in an anti-parallel configuration to the third switching diode 964 and the fourth switch 982 may be operatively coupled in an anti-parallel configuration to the fourth switching diode 984. Moreover, the fifth switch 992 may be operatively coupled in an anti-parallel configuration to the fifth switching diode 994. In one embodiment, the first switch 942, the second switch 952, the third switch 962, the fourth switch 982 and the fifth switch 992 may include insulated gate bipolar transistor (IGBT) switches, mechanical switches, or a combination thereof.

It may be noted that the first switching unit 940 and the fourth switching unit 980 may have similar orientations. The second switching unit 950, the third switching unit 960 and the fifth switching unit 990 may be disposed in a reverse orientation with respect to the orientation of the first switching unit 940 and the fourth switching unit 980. In particular, the second switch 952, the third switch 962, and the fifth switch 992 may be disposed in a reverse orientation with respect to an orientation of the first switch 942 and the fourth switch 982. Furthermore, each of the first switch 942, the second switch 952, the third switch 962, the fourth switch 982, and the fifth switch 992 may include an anode or a collector and a cathode or an emitter. The collector of the first switch 942 may be coupled to the first terminal node 912 of the electrical terminal 910. The emitter of the first switch 942 may be coupled to the emitter of the second switch 952. Moreover, the collector of the second switch 952 may be coupled to the collector of the fourth switch 982. The emitter of the fourth switch 982 may be coupled to the second terminal node 914. Also, the emitter and the collector of the third switch 962 may be coupled to the first terminal node 912 and the diode 970 respectively. Also, the emitter and the collector of the fifth switch 992 may be coupled to the diode 970 and the second terminal node 914 respectively. Furthermore, the second switching diode 954, the third switching diode 964 and the fifth switching diode 994 may be disposed in a reverse orientation with respect to an orientation of the first switching diode 944 and the fourth switching diode 984.

Additionally, the power converter module 900 may also include a first energy storage device 1000, a second energy storage device 1010, a third energy storage device 1020, and a fourth energy storage device 1030. The first energy storage device 1000 may be operatively coupled between the first node 922 and the fifth node 932. Also, the second energy storage device 1010 may be operatively coupled between the second node 924 and the sixth node 934. Similarly, the third energy storage device 1020 may be operatively coupled between the third node 926 and the seventh node 936. The fourth energy storage device 1030 may be operatively coupled between the fourth node 928 and the eighth node 938. In one embodiment, the first energy storage device 1000 and the third energy storage device 1020 may be arranged in a first orientation, while the second energy storage device 1010 and the fourth energy storage device 1030 may be operatively coupled in a second orientation, where the second orientation is opposite to the first orientation.

During a fault in a DC link such as the DC link 40 (see FIG. 1) of the power conversion system (see FIG. 1), the switches 942, 952, 962, 982, 992 in the power converter module 900 may be transitioned to a non-conducting state. Due to the aforementioned transition, the DC fault current flows from the second terminal node 914 to the first terminal node 912 through the fourth switching diode 984, the third energy storage device 1020, the diode 970, the second energy storage device 1010, and the first switching diode 944. Such a flow of DC fault current applies a negative voltage across the electrical terminal 910, where the negative voltage is a sum of the voltages across the third energy storage device 1020 and the second energy storage device 1010. The negative voltage provided by the power converter module 900 minimizes the DC fault current by opposing the alternating current (AC) voltage on the source side power conversion system 20 (see FIG. 1) or the load side power conversion system 30 (see FIG. 1) and hence limits the DC fault condition.

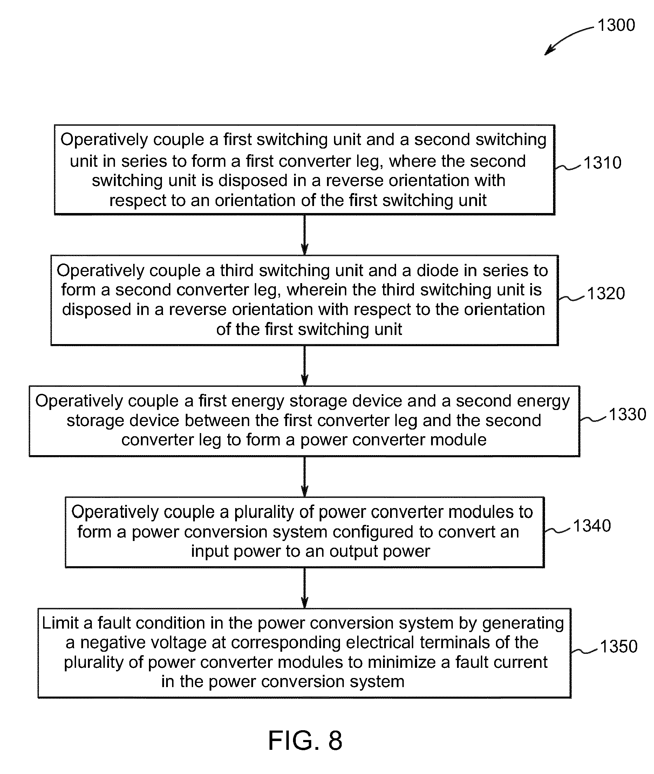

FIG. 8 is a flow chart representing a method for converting power 1300, according to aspects of the present disclosure. The method 1300 may include coupling a first switching unit and a second switching unit in series to form a first converter leg, where the second switching unit may be disposed in a reverse orientation with respect to an orientation of the first switching unit, as indicated by step 1310. Furthermore, a third switching unit may be coupled to a diode in series to form a second converter leg, where the third switching unit is disposed in a reverse orientation with respect to the orientation of the first switching unit, as indicated by step 1320. In one embodiment, the method 1300 may further include coupling in series a fourth switching unit to the second switching unit and coupling in series a fifth switching unit to the third switching unit, where the fifth switching unit is disposed in a reverse orientation with respect to an orientation of the fourth switching unit.

Furthermore, at step 1330, a first energy storage device and a second energy storage device may be operatively coupled between the first converter leg and the second converter leg to form a power converter module. In one embodiment, the method 1300 may further include operatively coupling a third energy storage device and a fourth energy storage device in opposing polarities between the first converter leg and the second converter leg. Moreover, as indicated by step 1340, a plurality of power converter modules may be operatively coupled to form a power conversion system configured to convert an input power to an output power.

During a fault condition in the power conversion system, a DC fault current may be induced in one or more power converter modules. In accordance with exemplary aspects of the present disclosure, once a fault condition is identified, a controller may be configured to aid in controlling a flow of the DC fault current. By way of example, the controller may be configured to energize or de-energize one or more switching units to force the DC fault current to follow a negative voltage current path. Accordingly, at step 1350, the fault condition may be limited by generating a negative voltage at corresponding electrical terminals of the plurality of power converter modules. In one embodiment, the negative voltage may be used to minimize the DC fault current, which in turn aids in limiting the fault condition.

It is to be understood that a skilled artisan will recognize the interchangeability of various features from different embodiments and that the various features described, as well as other known equivalents for each feature, may be mixed and matched by one of ordinary skill in this art to construct additional systems and techniques in accordance with principles of this disclosure. It is, therefore, to be understood that the appended claims are intended to cover all such modifications and changes as fall within the true spirit of the invention.

The exemplary embodiments of the power converter module described hereinabove aid in reducing a DC fault current and limiting a fault condition in a power conversion system. The exemplary power converter modules also entail use of fewer electronic components, which in turn reduces the cost of the power converter modules. The use of fewer electronic components also reduces the complexity of the power converter modules and enables easier packaging of the power converter modules.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A power converter module (100; 700; 900), comprising:
a first converter leg (120; 720; 920) comprising:
a first switching unit (140; 740; 940) and a second switching unit (150; 750; 950) coupled in series, wherein the second switching unit (150; 750; 950) is disposed in a reverse orientation with respect to an orientation of the first switching unit (140; 740; 940);
a second converter leg (130; 730; 930) comprising:
a third switching unit (160; 760; 960) and a diode (170; 770; 970) coupled in series, wherein the third switching unit (160; 760; 960) is disposed in a reverse orientation with respect to the orientation of the first switching unit (140; 740; 940);
a first energy storage device (180; 780; 1000) operatively coupled between the first converter leg (120; 720; 920) and the second converter leg (130; 730; 930); and
a second energy storage device (190; 790; 1010) operatively coupled between the first converter leg (120; 720; 920) and the second converter leg (130; 730; 930).

2. A power converter module (100; 700; 900) according to claim 1, wherein each of the first switching unit (140; 740; 940), the second switching unit (150; 750; 950), and the third switching unit (160; 760; 960) comprises a switch (142, 152, 162; 742, 752, 762; 942, 952, 962) and a switching diode (144. 154, 164; 744, 754, 764; 944, 954, 964) operatively coupled to each other in an anti-parallel configuration, wherein the switch optionally comprises an insulated gate bipolar transistor (IGBT), a mechanical switch, or a combination thereof.

3. A power converter module (100; 700; 900) according to claim 1 or claim 2, wherein the first switching unit (140; 740; 940) is disposed between a first node (122; 726; 922) and a second node (124; 724; 924) of the first converter leg (120; 720; 920) and the second switching unit (150; 750; 950) is disposed between the second node (124; 726; 924) and a third node (126; 722; 926) of the first converter leg (120; 720; 920) and/or wherein the third switching unit (160; 760; 960) is disposed between a first node (132; 736; 932) and a second node (134; 734; 934) of the second converter leg (130; 730; 930) and the diode (170; 770; 970) is disposed between the second node (134; 734; 934) and a third node (136; 732; 936) of the second converter leg (130; 730; 930).

4. A power converter module (100; 700; 900) according to any preceding claim, wherein the first energy storage device (180; 780; 1000) is disposed between a first node (122; 726; 922) of the first converter leg (120; 720; 920) and a first node (132; 736; 932) of the second converter leg (130; 730; 930) in a first orientation, wherein the second energy storage device (190; 790; 1010) is disposed between a second node (124; 724; 924) of the first converter leg (120; 720; 920) and a second node (134; 734; 934) of the second converter leg (130; 730; 930) in a second orientation, and wherein the second orientation is opposite to the first orientation.

5. A power converter module (100; 700) according to any preceding claim, wherein the second switching unit (150; 750) is operated with the third switching unit (160; 760) to provide a positive voltage across electrical terminals (112, 114; 712, 714) of the power converter module.

6. A power converter module (100; 700) according to any preceding claim, wherein the second switching unit (150; 750) is operated with the first switching unit (140; 740) to provide a zero voltage across electrical terminals (112, 114; 712, 714) of the power converter module.

7. A power converter module (100; 700) according to any preceding claim, wherein the diode (170; 770) and the first switching unit (140; 740) are configured to generate a negative voltage across electrical terminals (112, 114; 712, 714) of the power converter module (100; 700) to reduce a DC fault current.

8. A power converter module (900) according to any preceding claim, wherein the first converter leg (920) further comprises a fourth switching unit (980), wherein the second converter leg (930) further comprises a fifth switching unit (990), and wherein the fifth switching unit (990) is disposed in a reverse orientation with respect to an orientation of the fourth switching unit (980).

9. A power converter module (900) according to any preceding claim, further comprising a third energy storage device (1020) in a first orientation and a fourth energy storage device (1030) in a second orientation operatively coupled between the first converter leg (920) and the second converter leg (930), wherein the second orientation is opposite to the first orientation.

10. A power conversion system (10), e.g., a modular stacked multi-level power conversion system, comprising:
a plurality of phase units (50) configured to convert power corresponding to a respective phase of an input power, wherein each phase unit (50) comprises a plurality of power converter modules (100; 700; 900) according to any preceding claim coupled in series to each other.

11. A power conversion system (10) according to claim 10, wherein each phase unit (50) in the plurality of phase units is operatively coupled in parallel to other phase units in the plurality of phase units.

12. A power conversion system (10) according to claim 10 or claim 12, wherein the power conversion system is a high voltage direct current (HVDC) transmission system, an electrical power transmission, a power distribution system, an electrical machine control system, or a combination thereof

13. A power conversion system (10) according to claim 12, wherein the power conversion system comprises an alternating current (AC) to direct current (DC) power conversion system and a direct current (DC) to alternating current (AC) power conversion system.

14. A method for converting power, comprising:
operatively coupling a first switching unit (140; 740) and a second switching unit (150; 750) in series to form a first converter leg (120; 720), wherein the second switching unit (150; 750) is disposed in a reverse orientation with respect to an orientation of the first switching unit (140; 740);
operatively coupling a third switching unit (160; 760) and a diode (170; 770) in series to form a second converter leg (130; 730), wherein the third switching unit (160; 760) is disposed in a reverse orientation with respect to the orientation of the first switching unit (140; 740);
operatively coupling a first energy storage device (180; 780) and a second energy storage device (190; 790) between the first converter leg (120; 720) and the second converter leg (130; 730) to form a power converter module (100; 700);
operatively coupling a plurality of power converter modules (100; 700) to form a power conversion system (10) configured to convert an input power to an output power; and
limiting a fault condition in the power conversion system (10) upon identifying the fault condition to minimize a fault current in the power converter.

15. A method according to claim 14, wherein limiting the fault condition in the power conversion system (10) comprises:
generating a negative voltage at corresponding electrical terminals of the plurality of power converter modules (100; 700); and
directing a direct current fault current to flow through a negative voltage path to minimize a direct current fault current in the power conversion system (10).
